# EUROPEAN PATENT APPLICATION

(11) **EP 4 851 470 A1**
(43) Date of publication of application: **09.12.2026**
(21) Application number: 25748290.1
(22) Date of filing: 23.01.2025
(51) Int. Cl.: F16C 11/06, F16J 3/04, F16J 15/52

(54) **DUST COVER AND JOINT MECHANISM**

(30) Priority: 31.01.2024 JP 2024013241
(71) Applicant: NOK Corporation, Minato-ku Tokyo 105-8585 (JP)
(72) Inventor: KATSUTA, Minori, Makinohara-shi Shizuoka 421-0532 (JP); HOSEN, Tatsuro, Makinohara-shi, Shizuoka 421-0532 (JP)
(74) Representative: Global IP Europe Patentanwaltskanzlei
(86) International application number: PCT/JP2025/001981
(87) International publication number: WO 2025/164482

(57) **Abstract**

A dust cover is to be fixed to a socket supporting a ball stud. The dust cover includes a body for surrounding the ball stud, and an annular-fixed portion connected to the body. The fixed portion includes an inner-circumferential surface for contacting a mounting-groove of the socket, an outer-circumferential surface opposite to the inner-circumferential surface, an annular groove in the outer-circumferential surface and for accommodating a fastening member for fastening the fixed portion to the socket, and an extended-outer surface connecting an outer surface of the body to the outer-circumferential surface. The outer-circumferential surface is bent relative to the extended-outer surface at a first-bent portion located further radially outward along a radius of the fixed portion than a first-virtual surface obtained by continuously extending the outer surface of the body toward the groove, and is to be located further radially outward than an outer-peripheral portion of the fastening member.

## Description

### TECHNICAL FIELD

The present disclosure relates to dust covers used in ball joints.

### BACKGROUND ART

For example, dust covers are used in ball joints in mechanical devices such as vehicles. Patent Document 1 discloses a dust cover including a deformable rubber body portion and a fixed portion provided at one end of the body portion. An outer circumferential surface of the fixed portion is provided with an annular groove. The fixed portion is fastened by a fixing member, such as a clamp or a band, which is attached to the annular groove, and thus, the fixed portion is secured to a socket.

### Related Art Document

### Patent Document

Patent Document 1: Japanese Patent Application, Laid-Open Publication No. 2019-60437

### SUMMARY OF THE INVENTION

### Problem to be Solved by the Invention

The body portion of the dust cover is deformed as a ball stud of the ball joint swings. Stress caused by deformation of the body portion is generated in the body portion and the fixed portion. The stress tends to concentrate in the vicinity of a corner portion of a mounting groove of the fixed portion, the corner portion of the mounting groove being close to the body portion. When stress is repeatedly concentrated at the corner portion of the mounting groove over a long period of time, fatigue fracture starting from the corner portion may occur. In view of the above circumstances, an object of one aspect of the present disclosure is to improve the fatigue life of a dust cover.

### Means for Solving Problem

A dust cover according to an aspect of the present disclosure is a dust cover configured to be fixed to a socket supporting a ball stud, the dust cover including a body portion configured to surround the ball stud, and an annular fixed portion connected to the body portion, wherein the fixed portion includes an inner circumferential surface configured to be in contact with a mounting groove of the socket, an outer circumferential surface opposite to the inner circumferential surface, an annular groove provided in the outer circumferential surface, the groove being configured to accommodate a fastening member for fastening the fixed portion to the socket, and an extended outer surface connecting an outer surface of the body portion to the outer circumferential surface, and wherein the outer circumferential surface is bent relative to the extended outer surface at a first bent portion that is located further radially outward along a radius of the fixed portion than a first virtual surface obtained by continuously extending the outer surface of the body portion toward the groove, the outer circumferential surface being configured to be located further radially outward than an outer peripheral portion of the fastening member.

A dust cover according to another aspect of the present disclosure is a dust cover configured to be fixed to a socket supporting a ball stud, the dust cover including a body portion configured to surround the ball stud, and an annular fixed portion connected to the body portion, wherein the fixed portion includes an inner circumferential surface configured to be in contact with a mounting groove of the socket, an outer circumferential surface opposite to the inner circumferential surface, an annular groove provided in the outer circumferential surface, the groove being configured to accommodate a fastening member for fastening the fixed portion to the socket, and an extended outer surface connecting an outer surface of the body portion to the outer circumferential surface, wherein the outer circumferential surface is bent relative to the extended outer surface at a first bent portion that is located further radially outward along a radius of the fixed portion than a first virtual surface obtained by continuously extending the outer surface of the body portion toward the groove, wherein the groove includes a groove bottom along a circumferential direction of the fixed portion, a first groove wall protruding radially outward from an edge portion of the groove bottom that is close to the body portion, and a second groove wall protruding radially outward from an edge portion of the groove bottom that is far from the body portion, and wherein in a state in which the ball stud swings within a range of 20 degrees or less relative to a central axis of the fixed portion, a corner portion of the groove between the groove bottom and the first groove wall remains unchanged in position.

A dust cover according to another aspect of the present disclosure is a dust cover configured to be fixed to a socket supporting a ball stud, the dust cover including a body portion configured to surround the ball stud, and an annular fixed portion connected to the body portion, wherein the fixed portion includes an inner circumferential surface configured to be in contact with a mounting groove of the socket, an outer circumferential surface opposite to the inner circumferential surface, an annular groove provided in the outer circumferential surface, the groove being configured to accommodate a fastening member for fastening the fixed portion to the socket, and a bent surface connecting an inner surface of the body portion to the inner circumferential surface, wherein the bent surface includes a first surface continuous with the inner surface of the body portion, and a second surface connecting the first surface to the inner circumferential surface, and wherein the second surface is bent relative to the first surface radially inward along the radius of the fixed portion at a second bent portion that is located further outward than a second virtual surface obtained by continuously extending the inner surface of the body portion toward the inner circumferential surface.

A joint mechanism according to an aspect of the present disclosure is a joint mechanism including a socket provided with a mounting groove, a ball stud supported by the socket, a dust cover including a body portion surrounding the ball stud and an annular fixed portion connected to the body portion, and a fastening member fastening the fixed portion to the socket, wherein the fixed portion includes an inner circumferential surface in contact with the mounting groove of the socket, an outer circumferential surface opposite to the inner circumferential surface, an annular groove provided in the outer circumferential surface and accommodating the fastening member, and an extended outer surface connecting an outer surface of the body portion to the outer circumferential surface, and wherein the outer circumferential surface is bent relative to the extended outer surface at a first bent portion that is located further radially outward along a radius of the fixed portion than a first virtual surface obtained by continuously extending the outer surface of the body portion toward the groove, the outer circumferential surface being configured to be located further radially outward than an outer peripheral portion of the fastening member.

A joint mechanism according to another aspect of the present disclosure is a joint mechanism including a socket provided with a mounting groove, a ball stud supported by the socket, a dust cover including a body portion surrounding the ball stud and an annular fixed portion connected to the body portion, and a fastening member fastening the fixed portion to the socket, wherein the fixed portion includes an inner circumferential surface in contact with the mounting groove of the socket, an outer circumferential surface opposite to the inner circumferential surface, an annular groove provided in the outer circumferential surface and accommodating the fastening member, and an extended outer surface connecting an outer surface of the body portion to the outer circumferential surface, wherein the outer circumferential surface is bent relative to the extended outer surface at a first bent portion that is located further radially outward along a radius of the fixed portion than a first virtual surface obtained by continuously extending the outer surface of the body portion toward the groove, wherein the groove includes a groove bottom along a circumferential direction of the fixed portion, a first groove wall protruding radially outward from an edge portion of the groove bottom that is close to the body portion, and a second groove wall protruding radially outward from an edge portion of the groove bottom that is far from the body portion, and wherein in a state in which the ball stud swings within a range of 20 degrees or less relative to a central axis of the fixed portion, a corner portion of the groove between the groove bottom and the first groove wall remains unchanged in position.

A joint mechanism according to another aspect of the present disclosure is a joint mechanism including a socket provided with a mounting groove, a ball stud supported by the socket, a dust cover including a body portion surrounding the ball stud and an annular fixed portion connected to the body portion, and a fastening member fastening the fixed portion to the socket, wherein the fixed portion includes an inner circumferential surface in contact with the mounting groove of the socket, an outer circumferential surface opposite to the inner circumferential surface, an annular groove provided in the outer circumferential surface and accommodating the fastening member, and a bent surface connecting an inner surface of the body portion to the inner circumferential surface, wherein the bent surface includes a first surface continuous with the inner surface of the body portion, and a second surface connecting the first surface to the inner circumferential surface, and wherein the second surface is bent relative to the first surface radially inward along the radius of the fixed portion at a second bent portion that is located further outward than a second virtual surface obtained by continuously extending the inner surface of the body portion toward the inner circumferential surface.

### BRIEF DESCRIPTION OF THE DRAWINGS

Fig. 1 is a cross section of a joint mechanism according to a first embodiment.
Fig. 2 is a perspective view of a part of the joint mechanism according to the first embodiment.
Fig. 3 is a perspective view of a fastening member in the first embodiment.
Fig. 4 is an enlarged cross section of a vicinity of a fixed portion of a dust cover in an undeformed state.
Fig. 5 is an enlarged cross section of a vicinity of a fixed portion of a dust cover according to a comparative example.
Fig. 6 is an enlarged cross section of a vicinity of a fixed portion of a dust cover according to a second embodiment in an undeformed state.
Fig. 7 is an enlarged cross section of a vicinity of a fixed portion of a dust cover according to a third embodiment in an undeformed state.
Fig. 8 is an enlarged cross section of a vicinity of a fixed portion of a dust cover according to a modification in an undeformed state.

### MODES FOR CARRYING OUT THE INVENTION

Specific embodiments according to the present disclosure will now be described with reference to the accompanying drawings. It should be noted that in each drawing, dimensions and scales of elements may differ from those of actual products. In addition, the embodiments described below are exemplary embodiments assumed in a case in which the present disclosure is implemented. Thus, the scope of the present disclosure is not limited to the embodiments described below.

### A: First Embodiment

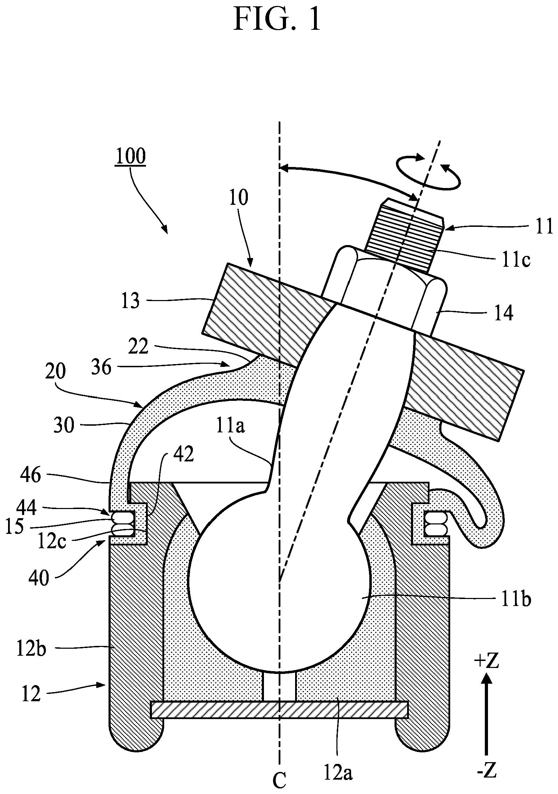

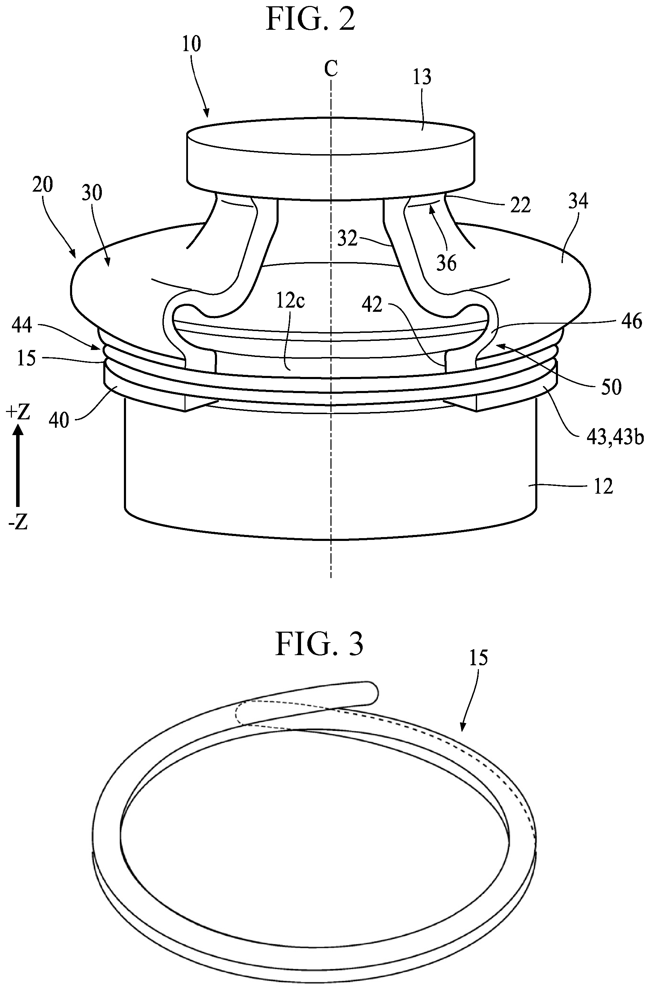

Fig. 1 is a cross section of a joint mechanism 100 according to a first embodiment. In addition, Fig. 2 is a perspective view of the joint mechanism 100, which is partially cut away. For example, the joint mechanism 100 according to the first embodiment is used in various mechanisms such as suspension mechanisms or steering mechanisms in mechanical apparatuses such as vehicles. However, mechanical apparatuses to which the present disclosure is applicable are not limited to vehicles.

As shown in Fig. 1 and Fig. 2, the joint mechanism 100 includes a ball joint 10, a dust cover 20, and a fastening member 15. The dust cover 20 is fixed to the ball joint 10 by the fastening member 15. As shown in Fig. 1, the ball joint 10 includes a ball stud 11, a socket 12, a knuckle 13, and a nut 14.

The ball stud 11 is an elongated structure. Specifically, the ball stud 11 includes a shaft portion 11a, a spherical portion 11b, and a screw portion 11c. The shaft portion 11a is a columnar portion shaped to have a circular cross section. The spherical portion 11b is a spherical portion provided at one end of the shaft portion 11a. The screw portion 11c is a columnar portion provided at the other end of the shaft portion 11a, opposite to the spherical portion 11b. An outer circumferential surface of the screw portion 11c is provided with thread grooves.

The socket 12 is a structure supporting the ball stud 11. It should be noted that in the following description, directions along a central axis C of the socket 12 are referred to as "axial directions". The axial directions are defined as a +Z direction and a -Z direction. The +Z direction is, for example, upward along a vertical direction, and the -Z direction is, for example, downward along the vertical direction. However, a direction in which the joint mechanism 100 is provided may be freely changed. Thus, an axial direction is not limited to the vertical direction.

In addition, a direction of a circumference of a virtual circle that has a freely selected diameter and a center disposed at the central axis C is referred to as a "circumferential direction", and a direction of a radius of the virtual circle is referred to as a "radial direction". A direction along the radial direction and toward the central axis C may be referred to as "inward", and a direction along the radial direction and opposite to a direction toward the central axis C may be referred to as "outward".

As shown in Fig. 1, the socket 12 includes a bearing portion 12a and a support portion 12b. The bearing portion 12a is a portion provided with a recessed spherical bearing surface opening in the +Z direction. The spherical portion 11b of the ball stud 11 is inserted into the bearing portion 12a. Specifically, the ball stud 11 is supported by the bearing portion 12a in a state in which the spherical portion 11b is in contact with the bearing surface of the bearing portion 12a. A gap between a surface of the spherical portion 11b and the bearing surface of the bearing portion 12a is filled, for example, with a lubricant such as grease.

As described above, the bearing portion 12a supports the ball stud 11 in a rotatable and swingable state. Rotation of the ball stud 11 means rotation of the ball stud 11 about a central axis of the shaft portion 11a. Swinging of the ball stud 11 means that the ball stud 11 rotates about a center located in the spherical portion 11b such that a central axis of the ball stud 11 is inclined relative to the central axis C of the socket.

The support portion 12b is a portion supporting the bearing portion 12a and the dust cover 20. A portion of the support portion 12b that is close to its +Z direction end is provided with a mounting groove 12c. The mounting groove 12c is a portion (mounting portion) to which the dust cover 20 is attached. Specifically, the mounting groove 12c is shaped to be annular and to extend over the entire circumference of an outer circumferential surface of the support portion 12b.

The knuckle 13 is an annular structure (coupling member) fixed to a portion of the shaft portion 11a of the ball stud 11, opposite to the spherical portion 11b. The shaft portion 11a is inserted into the knuckle 13. The screw portion 11c of the ball stud 11 protrudes in the +Z direction from an end face of the knuckle 13 that is in the +Z direction. The knuckle 13 is integrally fixed to the ball stud 11 by the nut 14 attached to the screw portion 11c.

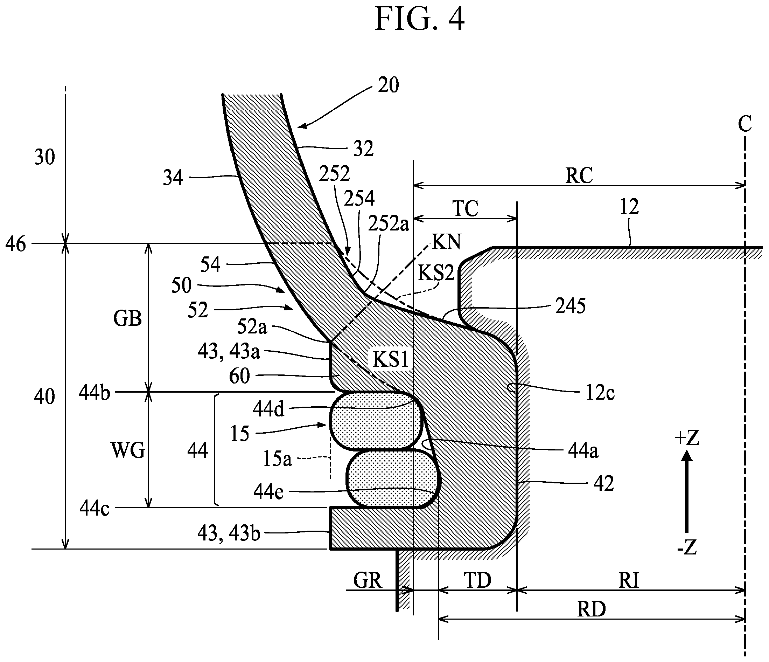

Fig. 3 is a perspective view of the fastening member 15. As shown in Fig. 3, the fastening member 15 is an annular clip formed by spirally winding a metal wire (e.g., in the shape of a torsion spring). In the first embodiment, the number of turns of the fastening member 15 is "2"; however, the number of turns may be changed as desired. A thickness of the wire forming the fastening member 15 is set, for example, to a dimension within a range of 0.8 mm or more and 1.5 mm or less. The thickness of the wire is a dimension of the wire in a direction of a central axis of the fastening member 15. As shown in Fig. 4, the fastening member 15 includes an outer peripheral portion 15a. When the fastening member 15 is regarded as being approximately cylindrical, the outer peripheral portion 15a corresponds to an outer circumferential surface of the cylinder. It should be noted that the structure of the fastening member 15 may be selected as desired. For example, an annular member such as a clamp, band, or snap ring may be used as the fastening member 15. It should be noted that in Fig. 2, the ball stud 11 and the bearing portion 12a of the socket 12 are not shown.

As shown in Fig. 1 and Fig. 2, the fastening member 15 is attached to the dust cover 20. Specifically, the dust cover 20 is fastened by the fastening member 15 and is thereby fixed to the socket 12.

### Dust Cover 20

To prevent adhesion of dust or moisture to a connecting portion between the ball stud 11 (spherical portion 11b) and the socket 12 (bearing portion 12a), and to prevent outflow of the lubricant provided in the connecting portion, the dust cover 20 is provided for the ball joint 10.

As shown in Fig. 1 and Fig. 2, the dust cover 20 according to the first embodiment includes a sealing portion 22, a body portion 30, and a fixed portion 40. The sealing portion 22, the body portion 30, and the fixed portion 40 are integrally formed. In other words, the dust cover 20 is, for example, a molded product in which the sealing portion 22, the body portion 30, and the fixed portion 40 are integrally formed by using a mold. It should be noted that the central axis C is also defined as the central axis of the dust cover 20 in an initial state that is not elastically deformed (hereinafter referred to as "undeformed state"). The undeformed state is also defined as a state in which the central axis of the ball stud 11 coincides with the central axis C of the socket 12.

The dust cover 20 is formed, for example, of an elastic material such as rubber (an elastomer) and is thereby deformable. The elastic material used as a base material of the dust cover 20 is, for example, vinyl methyl silicone rubber (VMQ) or ethylene propylene diene rubber (EPDM). However, various rubber materials such as chloroprene rubber (CR), silicone rubber (SR), acrylic rubber (ACM), urethane rubber (U), polyurethane rubber (PUR), or fluororubber (FKM) may be used.

### Body Portion 30

The body portion 30 is a cylindrical portion surrounding the ball stud 11. Specifically, the body portion 30 is formed in a curved shape such that a middle portion in the axial direction has a larger diameter than both end portions, and the body portion 30 is elastically deformable upon application of an external force. The body portion 30 includes an inner surface 32 facing the ball stud 11 and an outer surface 34 opposite to the inner surface 32. In addition, the body portion 30 includes a neck portion 36 that is a boundary between it and the sealing portion 22. The neck portion 36 is a portion of the body portion 30 having the minimum diameter.

### Sealing Portion 22

As shown in Fig. 1, the sealing portion 22 constitutes an end portion of the dust cover 20 that is in the +Z direction. Specifically, the sealing portion 22 is an annular portion connected to an end of the body portion 30 that is in the +Z direction (i.e., the neck portion 36). The sealing portion 22 is in contact with an outer circumferential surface of the shaft portion 11a and with a surface of the knuckle 13 that is in the -Z direction. The sealing portion 22 swings with the ball stud 11. In addition, the sealing portion 22 slides relative to the outer circumferential surface of the shaft portion 11a and to a surface of the knuckle 13. In other words, in a state in which the outer circumferential surface of the shaft portion 11a and the surface of the knuckle 13 are in contact with the sealing portion 22, the ball stud 11 is rotatable about a center located on the central axis of the shaft portion 11a.

### Fixed Portion 40

The fixed portion 40 constitutes an end portion of the dust cover 20 that is in the -Z direction. Specifically, the fixed portion 40 is an annular portion connected to an end portion of the body portion 30 that is in the -Z direction. Thus, the body portion 30 is located between the sealing portion 22 and the fixed portion 40. As shown in Fig. 1 and Fig. 2, the fixed portion 40 is attached to the mounting groove 12c of the socket 12. The fixed portion 40 is coaxially fixed to the socket 12. Thus, the central axis C is also defined as a central axis of the fixed portion 40.

Fig. 4 is an enlarged cross section of a vicinity of the fixed portion 40. As shown in Fig. 4, the fixed portion 40 includes an inner circumferential surface 42, an outer circumferential surface 43, a groove 44, a boundary portion 46, and a constricted portion 50.

The inner circumferential surface 42 is a cylindrical surface (a circular surface) facing radially inward in the fixed portion 40. The inner circumferential surface 42 is in contact with a bottom surface of the mounting groove 12c of the socket 12. A radius RI of the inner circumferential surface 42 (an inner diameter of the fixed portion 40) is constant in the axial direction.

The outer circumferential surface 43 is a surface opposite to the inner circumferential surface 42. Specifically, the outer circumferential surface 43 is a cylindrical surface (a circular surface) facing radially outward in the fixed portion 40. A radius of the outer circumferential surface 43 is constant in the axial direction. As shown in Fig. 4, the outer circumferential surface 43 includes an outer circumferential surface 43a and an outer circumferential surface 43b. The outer circumferential surface 43a is located in the +Z direction relative to the outer circumferential surface 43b.

The groove 44 is provided in the outer circumferential surface 43. In other words, the groove 44 is a bottomed groove that is recessed radially inward from the outer circumferential surface 43. The groove 44 is annular and is continuous in the circumferential direction over the entire circumference of the fixed portion 40. In the axial direction, the groove 44 is located between the outer circumferential surface 43a and the outer circumferential surface 43b. The fastening member 15 is accommodated in the groove 44. Specifically, in a state in which the fixed portion 40 is accommodated in the mounting groove 12c of the socket 12, the fastening member 15 is attached to the groove 44. The fixed portion 40 is fastened by the fastening member 15, thereby fixing the dust cover 20 to the socket 12.

As shown in Fig. 4, the groove 44 is formed to have a substantially U-shaped cross section. Specifically, the groove 44 includes a groove bottom 44a, a groove wall 44b, and a groove wall 44c. The groove bottom 44a is a bottom surface along the circumferential direction and is a surface of revolution about the central axis C.

The groove wall 44b is a side wall of the groove 44 located in the +Z direction. Specifically, the groove wall 44b protrudes radially outward from an end of the groove bottom 44a that is in the +Z direction (i.e., an upper end close to the body portion 30). The groove wall 44b is connected to the outer circumferential surface 43a. The groove wall 44c is a side wall of the groove 44 that is located in the -Z direction. Specifically, the groove wall 44c protrudes radially outward from an end of the groove bottom 44a that is in the -Z direction (i.e., a lower end far from the body portion 30). The groove wall 44c is connected to the outer circumferential surface 43b. The groove wall 44b and the groove wall 44c are planar surfaces perpendicular to the central axis C and face each other with an axial spacing therebetween. It should be noted that the groove wall 44b is an example of a "first groove wall", and the groove wall 44c is an example of a "second groove wall".

In Fig. 4, a corner portion 44d is a corner portion of the groove 44 that is located in the +Z direction. In other words, the corner portion 44d is a portion at which the groove bottom 44a and the groove wall 44b intersect. The corner portion 44d is formed as a rounded curved surface (i.e., an arcuate surface) between the groove bottom 44a and the groove wall 44b. In Fig. 4, a corner portion 44e is a corner portion of the groove 44 that is located in the -Z direction. In other words, the corner portion 44e is a portion at which the groove bottom 44a and the groove wall 44c intersect. The corner portion 44e is formed as a rounded curved surface (i.e., an arcuate surface) between the groove bottom 44a and the groove wall 44c.

The groove 44 is configured to accommodate the fastening member 15. The fastening member 15 accommodated in the groove 44 is sandwiched between the groove wall 44b and the groove wall 44c. In a state in which the fixed portion 40 is fastened by the fastening member 15, the groove bottom 44a of the groove 44 is pressed radially inward by the fastening member 15. In addition, the groove wall 44b is pressed toward the +Z direction by the fastening member 15, and the groove wall 44c is pressed toward the -Z direction by the fastening member 15. Consequently, the fastening member 15 imposes a fastening force (i.e., contact pressure) on the groove 44.

As shown in Fig. 4, the outer circumferential surface 43 (43a, 43b) of the fixed portion 40 is located radially outward relative to the outer peripheral portion 15a of the fastening member 15 that is accommodated in the groove 44. In other words, the outer peripheral portion 15a of the fastening member 15 is located radially inward relative to the outer circumferential surface 43 (the outer circumferential surface 43a and the outer circumferential surface 43b). It should be noted that the outer circumferential surface 43 and the outer peripheral portion 15a of the fastening member 15 may overlap each other as viewed in a direction along the central axis C. In addition, the outer peripheral portion 15a may be located radially outward relative to the outer circumferential surface 43 (the outer circumferential surface 43a and the outer circumferential surface 43b).

In Fig. 4, a groove width WG of the groove 44 is shown. The groove width WG is a dimension of the groove 44 in the axial direction. In other words, a distance between the groove wall 44b and the groove wall 44c of the groove 44 is defined as the groove width WG. In a configuration in which the wire forming the fastening member 15 has a thickness of 0.8 mm or more and 1.5 mm or less as described above, the groove width WG is preferably within a range of 2.5 mm or more and 5.0 mm or less. In the first embodiment, the groove width WG is 3.0 mm. However, the groove width WG may be changed as desired.

In Fig. 4, a distance RC is a distance from the central axis C to an end of the groove bottom 44a that is in the +Z direction (i.e., the corner portion 44d). The distance RC is also defined as a radius of the corner portion 44d. In Fig. 4, a distance RD is a distance from the central axis C to an end of the groove bottom 44a that is in the -Z direction (i.e., the corner portion 44e). The distance RD is also defined as a radius of the corner portion 44e. As shown in Fig. 4, the distance RC is greater than the distance RD (RC > RD).

In other words, the groove bottom 44a of the groove 44 is a surface of revolution that is inclined relative to the central axis C such that the distance RC is greater than the distance RD. Specifically, the groove bottom 44a is a surface of revolution that has a shape of a frustum of a cone having a radius that increases linearly toward the +Z direction (i.e., a tapered shape). As described above, the distance RC is greater than the distance RD; thus, a thickness TC from the corner portion 44d to the inner circumferential surface 42 is greater than a thickness TD from the corner portion 44e to the inner circumferential surface 42 (TC > TD). In the first embodiment, the thickness TC is 2 mm, and the thickness TD is 1.4 mm. It should be noted that the distance RC is an example of a "first distance", and the distance RD is an example of a "second distance".

In Fig. 4, a distance GR is a difference between the distance RC and the distance RD. The groove bottom 44a is formed such that the distance GR is within a range of 15% or more and 60% or less of the groove width WG. In the first embodiment, the distance GR is 0.6 mm.

As shown in Fig. 4, the boundary portion 46 is a boundary between the body portion 30 and the fixed portion 40. In other words, the boundary portion 46 is a portion of the dust cover 20 that connects the body portion 30 to the fixed portion 40. As shown in Fig. 4, when the dust cover 20 is in the undeformed state, the boundary portion 46 is spaced apart from the groove wall 44b (the corner portion 44d) by a distance GB toward the +Z direction. The distance GB is a distance equal to 1.2 times the groove width WG of the groove 44.

As shown in Fig. 4, when the dust cover 20 is in the undeformed state, a virtual surface KS1 is a virtual surface of revolution that is obtained by continuously extending the outer surface 34 of the body portion 30 from the boundary portion 46 toward the groove 44. In other words, the virtual surface KS1 extends continuously from the boundary portion 46 along the outer surface 34 toward the corner portion 44d. It should be noted that the virtual surface KS1 is an example of a "first virtual surface".

In addition, as shown in Fig. 4, when the dust cover 20 is in the undeformed state, a virtual surface KS2 is a virtual surface of revolution that is obtained by continuously extending the inner surface 32 of the body portion 30 from the boundary portion 46 toward the inner circumferential surface 42 of the fixed portion 40. In other words, the virtual surface KS2 extends continuously from the boundary portion 46 along the inner surface 32 toward an upper edge of the inner circumferential surface 42 (i.e., an edge in the +Z direction). It should be noted that the virtual surface KS2 is an example of a "second virtual surface".

### Constricted Portion 50

As shown in Fig. 4, the constricted portion 50 is a portion connecting the boundary portion 46 to a portion of the dust cover 20 between the groove 44 and the inner circumferential surface 42. The constricted portion 50 includes a bent surface 52 and a bent surface 252. The constricted portion 50 further includes a thick portion 60.

The bent surface 52 connects the outer surface 34 of the body portion 30 to the groove 44. Specifically, the bent surface 52 is a portion of a radially outer surface of the fixed portion 40 and is located between the groove 44 and the boundary portion 46.

The bent surface 52 includes an extended outer surface 54, the outer circumferential surface 43a, and a bent portion 52a. The extended outer surface 54 connects the outer surface 34 of the body portion 30 to the outer circumferential surface 43a. Specifically, the extended outer surface 54 is a part of an outer wall surface of the fixed portion 40 and is continuous with the outer surface 34 of the body portion 30 at the boundary portion 46. As shown in Fig. 4, a portion of the extended outer surface 54 that is continuous with the outer surface 34 of the body portion 30 coincides with a portion of the virtual surface KS1. It should be noted that the extended outer surface 54 may be located radially outward relative to the virtual surface KS1.

### Bent Portion 52a

The bent portion 52a is a bent portion of the bent surface 52. Specifically, the bent portion 52a is a portion of the bent surface 52 that is located at a boundary between the outer circumferential surface 43a and the extended outer surface 54. The bent portion 52a is also defined as a portion of the bent surface 52 that connects the outer circumferential surface 43a to the extended outer surface 54. It should be noted that the bent portion 52a is an example of a "first bent portion".

The outer circumferential surface 43a is formed to be bent relative to the extended outer surface 54 at the bent portion 52a and to extend toward the groove wall 44b. In other words, the bent surface 52 is bent at the bent portion 52a such that the outer circumferential surface 43a is located radially outward relative to the virtual surface KS1. As described above, the bent portion 52a is bent at the bent portion 52a such that a portion of the fixed portion 40 between the boundary portion 46 and the groove 44 is thickened.

As shown in Fig. 4, in the axial direction, a location of the bent portion 52a is different from a location of the corner portion 44d. Specifically, in the axial direction, the bent portion 52a is located in the +Z direction relative to the corner portion 44d. In addition, in the radial direction, a location of the bent portion 52a is different from a location of the corner portion 44d. Specifically, the bent portion 52a is located radially outward relative to the corner portion 44d. As described above, the bent portion 52a and the corner portion 44d are formed at locations that are axially and radially spaced apart from each other.

As shown in Fig. 4, the thick portion 60 is a portion of the fixed portion 40 that is defined by the virtual surface KS1, the outer circumferential surface 43a, and the groove wall 44b as viewed in cross section. Within a portion of the fixed portion 40 between the groove wall 44b and the boundary portion 46, a portion axially overlapping the thick portion 60 has a greater thickness than a portion not axially overlapping the thick portion 60. In other words, the bent surface 52 is bent at the bent portion 52a such that a portion between the boundary portion 46 and the groove 44 is thickened.

The bent surface 252 connects the inner surface 32 of the body portion 30 to the inner circumferential surface 42 of the fixed portion 40. Specifically, the bent surface 252 is a portion of a radially inner surface of the fixed portion 40 and is located between the inner circumferential surface 42 and the boundary portion 46.

The bent surface 252 includes an extended inner surface 254, an extended surface 245, and a bent portion 252a. The extended inner surface 254 is a surface of revolution that is continuous with the inner surface 32 of the body portion 30. Specifically, the extended inner surface 254 is continuous with the inner surface 32 of the body portion 30 at the boundary portion 46 and is located radially outward (closer to the extended outer surface 54) relative to the virtual surface KS2. It should be noted that the extended inner surface 254 is an example of a "first surface".

The extended surface 245 is a surface of revolution that connects the extended inner surface 254 to the inner circumferential surface 42. Specifically, the extended surface 245 is bent radially outward from an edge of the inner circumferential surface 42 that is in the +Z direction and is located radially outward (closer to the extended outer surface 54) relative to the virtual surface KS2. It should be noted that the extended surface 245 is an example of a "second surface".

### Bent portion 252a

The bent portion 252a is a portion of the bent surface 252 that is bent. Specifically, the bent portion 252a is located at a boundary on the bent surface 252 between the extended inner surface 254 and the extended surface 245. The bent portion 252a is also defined as a portion of the bent surface 252 that connects the extended inner surface 254 to the extended surface 245. The bent portion 252a is located radially outward relative to the virtual surface KS2. It should be noted that the bent portion 252a is an example of a "second bent portion".

The extended surface 245 is formed to be bent radially inward relative to the extended inner surface 254 at the bent portion 252a and to extend toward the inner circumferential surface 42. In other words, the bent surface 252 is bent at the bent portion 252a such that both the extended inner surface 254 and the extended surface 245 are located radially outward relative to the virtual surface KS2. As described above, the bent surface 252 is bent at the bent portion 252a so as to protrude radially outward relative to the virtual surface KS2.

As shown in Fig. 4, in the axial direction, a location of the bent portion 252a is different from a location of the corner portion 44d. Specifically, in the axial direction, the bent portion 252a is located in the +Z direction relative to the corner portion 44d. In addition, in the radial direction, a location of the bent portion 252a is different from a location of the corner portion 44d. Specifically, the bent portion 252a is located radially outward relative to the corner portion 44d. As described above, the bent portion 252a and the corner portion 44d are formed at locations that are axially and radially spaced apart from each other.

As shown in Fig. 4, a location of the bent portion 52a and a location of the bent portion 252a are axially and radially different from each other. The bent portion 52a and the bent portion 252a are radially displaced from each other. In other words, a location of the bent portion 52a in the radial direction is different from a location of the bent portion 252a in the radial direction. Specifically, the bent portion 52a is located radially outward relative to the bent portion 252a.

In addition, the bent portion 52a and the bent portion 252a are axially displaced from each other. In other words, a location of the bent portion 52a in the axial direction is different from a location of the bent portion 252a in the axial direction. Specifically, in the axial direction, the bent portion 52a is located in the -Z direction relative to the bent portion 252a.

In Fig. 4, a virtual normal line KN is shown. The virtual normal line KN is a virtual line obtained by extending a normal line to the extended outer surface 54 at the bent portion 52a toward the virtual surface KS2. The bent portion 252a is preferably configured not to overlap the virtual normal line KN associated with the bent portion 52a. In other words, as viewed in cross section, the bent portion 252a is offset from the virtual normal line KN and is not located on the virtual normal line KN.

In the fixed portion 40, a part of the constricted portion 50 that is located in the +Z direction relative to the bent portion 252a can deform integrally with the body portion 30. Furthermore, in the fixed portion 40, a part of the constricted portion 50 that is located in the +Z direction relative to the bent portion 52a can deform integrally with the body portion 30.

### Effects Provided by First Embodiment

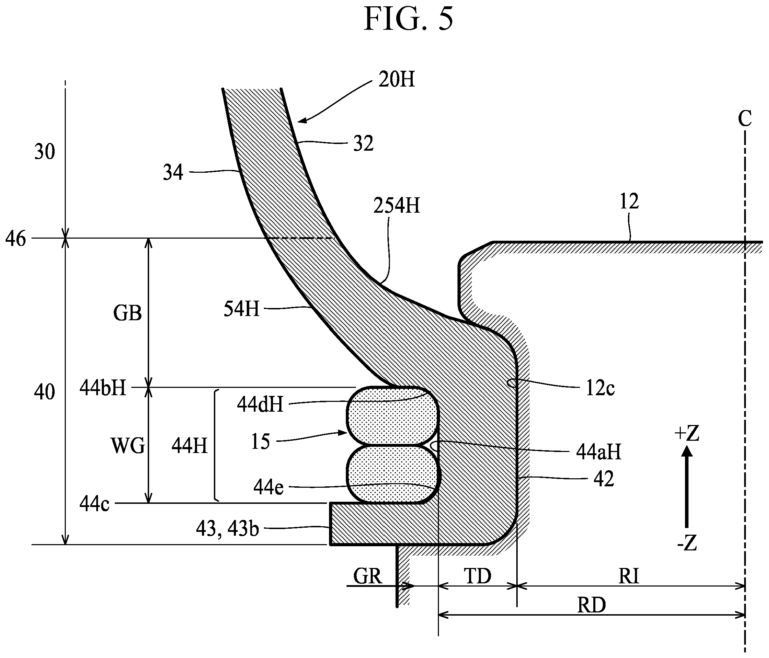

Functions and effects of the dust cover 20 of the first embodiment will be described. Fig. 5 is a cross section of a part of a dust cover 20H according to an example to be compared with the dust cover 20 of the first embodiment (hereinafter referred to as a "comparative example"). In the dust cover 20H of the comparative example, for elements that are the same as those of the dust cover 20 of the first embodiment, the same reference numerals as in the first embodiment are used for convenience.

As shown in Fig. 5, the dust cover 20H of the comparative example is not provided with the constricted portion 50 provided in the dust cover 20 of the first embodiment. In other words, the dust cover 20H is provided with neither the bent portion 52a nor the bent portion 252a. In addition, the dust cover 20H is not provided with the thick portion 60 provided in the first embodiment. The dust cover 20H of the comparative example includes a groove 44H, an extended outer surface 54H, and an extended inner surface 254H, in place of the groove 44, the extended outer surface 54, and the extended inner surface 254 that are provided in the first embodiment.

The groove 44H includes a groove bottom 44aH, a groove wall 44bH, and a corner portion 44dH, in place of the groove bottom 44a, the groove wall 44b, and the corner portion 44d that are provided in the first embodiment. The groove bottom 44aH is a cylindrical surface parallel to the inner circumferential surface 42. The groove wall 44bH has a smaller dimension in the radial direction than the groove wall 44c. A distance from the corner portion 44dH to the central axis C is equal to the distance RD from the corner portion 44e to the central axis C.

In addition, the extended outer surface 54H is a curved surface that extends from the boundary portion 46 along the outer surface 34 of the body portion 30 and that is connected to the groove wall 44bH. The extended inner surface 254H is a surface that extends from the boundary portion 46 along the inner surface 32 of the body portion 30 and that is connected to the inner circumferential surface 42. The extended inner surface 254H coincides with the virtual surface KS2 of the first embodiment. In addition, the outer peripheral portion 15a of the fastening member 15 is located radially outward relative to the groove wall 44bH. Except for the elements described above, elements of the dust cover 20H of the comparative example are the same as those of the dust cover 20 of the first embodiment.

The dust cover 20H includes neither the bent portion 52a nor the bent portion 252a. Thus, in the dust cover 20H, stress caused by swinging of the ball stud 11 is concentrated in a vicinity of the corner portion 44dH of the groove 44H to which the fastening member 15 is attached. When stress is repeatedly concentrated at the corner portion 44dH over a long period of time, fatigue fracture starting from the corner portion 44dH may occur in the dust cover 20H.

In contrast to the comparative example, the dust cover 20 of the first embodiment includes the bent portion 52a. The bent portion 52a is spaced apart from the corner portion 44d. In the above-described configuration, stress caused by swinging of the ball stud 11 is distributed between the corner portion 44d and the bent portion 52a. Thus, according to the first embodiment, it is possible to improve the fatigue life of the dust cover 20 as compared with the comparative example.

As described above, in the first embodiment, the concentration of stress at the corner portion 44d of the fixed portion 40 is substantially prevented; thus, it is possible to reduce displacement of the corner portion 44d as compared with the comparative example. Specifically, in the first embodiment, the corner portion 44d of the groove 44 is not displaced in a state in which, for example, the ball stud 11 swings within a range of 20 degrees or less (more preferably, 30 degrees or less) relative to the central axis C. In other words, in the first embodiment, the fixed portion 40 is provided with one or both of the bent portion 52a and the bent portion 252a such that the corner portion 44d of the groove 44 is not displaced in a state in which the ball stud 11 swings within 20 degrees or less relative to the central axis C. It should be noted that, as will be understood from Fig. 1, the angle of the ball stud 11 relative to the central axis C is an angle of the central axis of the ball stud 11 relative to the central axis C of the socket 12.

In the first embodiment, the outer circumferential surface 43 (43a, 43b) of the fixed portion 40 is located radially outward relative to the outer peripheral portion 15a of the fastening member 15. Thus, the height of the groove wall 44b of the groove 44 is greater than the thickness of the fastening member 15. In the above-described configuration, in the axial direction, an entire region of the fastening member 15 that is in the thickness direction overlaps the groove wall 44b. In other words, the area of contact between the groove wall 44b and the fastening member 15 is greater than the area of contact between the groove wall 44bH and the fastening member 15 in the comparative example. Thus, the contact pressure applied by the fastening member 15 to the groove wall 44b is less than the contact pressure applied by the fastening member 15 to the groove wall 44bH in the comparative example. In the above-described configuration, the stress generated in the corner portion 44d due to contact between the fastening member 15 and the groove wall 44b can be reduced as compared with the dust cover 20H of the comparative example. Thus, according to the first embodiment, as compared with the comparative example, it is possible to improve the fatigue life of the fixed portion 40. In particular, in the first embodiment, the dust cover 20 includes the thick portion 60; thus, it is possible to further reduce the pressure applied by the fastening member 15 to the groove wall 44b due to contact therebetween. Thus, according to the first embodiment, it is possible to more effectively improve the fatigue life of the fixed portion 40.

In the first embodiment, the distance RC from the corner portion 44d to the central axis C is greater than the distance RD from the corner portion 44e to the central axis C. In other words, the thickness TC from the corner portion 44d to the inner circumferential surface 42 is greater than the thickness TD from the corner portion 44e to the inner circumferential surface 42. In the above-described configuration, the stress generated in the corner portion 44d due to fastening by the fastening member 15 is smaller than that generated in the corner portion 44dH of the comparative example. Thus, according to the first embodiment, it is possible to further reduce the stress generated in the corner portion 44d due to fastening by the fastening member 15. In particular, in the first embodiment, the distance GR, which is the difference between the distance RD and the distance RC, is 15% or more and 60% or less of the groove width WG of the groove 44. Thus, it is possible to more effectively reduce the stress generated in the corner portion 44d due to fastening by the fastening member 15.

In the first embodiment, the groove bottom 44a is inclined relative to the central axis C. Specifically, the groove bottom 44a is inclined relative to the central axis C such that the distance RC is greater than the distance RD. Thus, the stress caused by fastening with the fastening member 15 tends to act toward the corner portion 44e. In other words, according to the first embodiment, it is possible to effectively reduce the concentration of stress at the corner portion 44d as compared with a configuration in which the groove bottom 44a is parallel to the central axis C.

In addition, the dust cover 20 according to the first embodiment includes the bent portion 252a. The bent portion 252a is spaced apart from the corner portion 44d. In the above-described configuration, stress caused by swinging of the ball stud 11 is distributed among the corner portion 44d, the bent portion 52a, and the bent portion 252a. Thus, according to the first embodiment, it is possible to improve the fatigue life of the dust cover 20 as compared with the comparative example.

In the first embodiment, the location of the bent portion 52a in the radial direction is different from the location of the bent portion 252a in the radial direction. According to the above-described configuration, it is possible to prevent the length of a virtual straight line connecting the bent portion 52a to the bent portion 252a from being equal to the minimum thickness of a deformable portion of the dust cover 20. Thus, it is possible to effectively improve the fatigue life of the fixed portion 40.

In addition, the location of the bent portion 52a in the axial direction is different from the location of the bent portion 252a in the axial direction. According to the above-described configuration, it is possible to prevent the length of the virtual straight line connecting the bent portion 52a to the bent portion 252a from being equal to the minimum thickness of the deformable portion of the dust cover 20. Thus, it is possible to effectively improve the fatigue life of the fixed portion 40.

In addition, the bent portion 252a is offset from the virtual normal line KN associated with the bent portion 52a. Thus, it is possible to more effectively prevent the length of the virtual straight line connecting the bent portion 52a to the bent portion 252a from being equal to the minimum thickness of the deformable portion of the dust cover 20. Thus, it is possible to more effectively improve the fatigue life of a portion of the dust cover 20 that is in the vicinity of the bent portion 52a and the bent portion 252a.

### B: Second Embodiment

A second embodiment will be described. It should be noted that in each embodiment described below, elements having the same functions as those in the first embodiment are denoted by the same reference numerals as in the first embodiment, and detailed description thereof is omitted as appropriate.

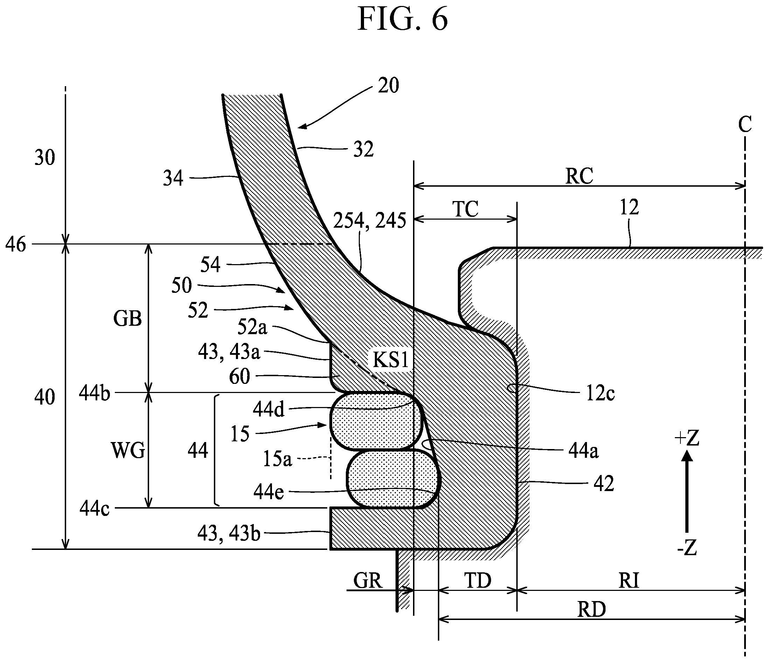

Fig. 6 is a cross section of an example of a configuration of a dust cover 20 according to the second embodiment. In the first embodiment, the fixed portion 40 in which the dust cover 20 includes both the bent portion 52a and the bent portion 252a is described. As shown in Fig. 6, the dust cover 20 according to the second embodiment includes the fixed portion 40 having the bent portion 52a, as in the first embodiment, but differs from the first embodiment in that the fixed portion 40 does not include the bent portion 252a. In other words, in the second embodiment, the extended inner surface 254 (or the extended surface 245) extends as a continuous curved surface from the boundary portion 46 to the inner circumferential surface 42. The extended inner surface 254 (or the extended surface 245) of the second embodiment has the same shape as the virtual surface KS2 in the first embodiment.

As in the first embodiment, the bent surface 52 of the second embodiment includes the extended outer surface 54, the outer circumferential surface 43a, and the bent portion 52a. In other words, in the second embodiment, the bent portion 52a is provided at a location that is spaced apart from the corner portion 44d. According to the above-described configuration, as in the first embodiment, stress caused by swinging of the ball stud 11 is distributed between the corner portion 44d and the bent portion 52a. Thus, in the second embodiment, as in the first embodiment, the fatigue life of the dust cover 20 can be improved as compared with the comparative example.

### C: Third Embodiment

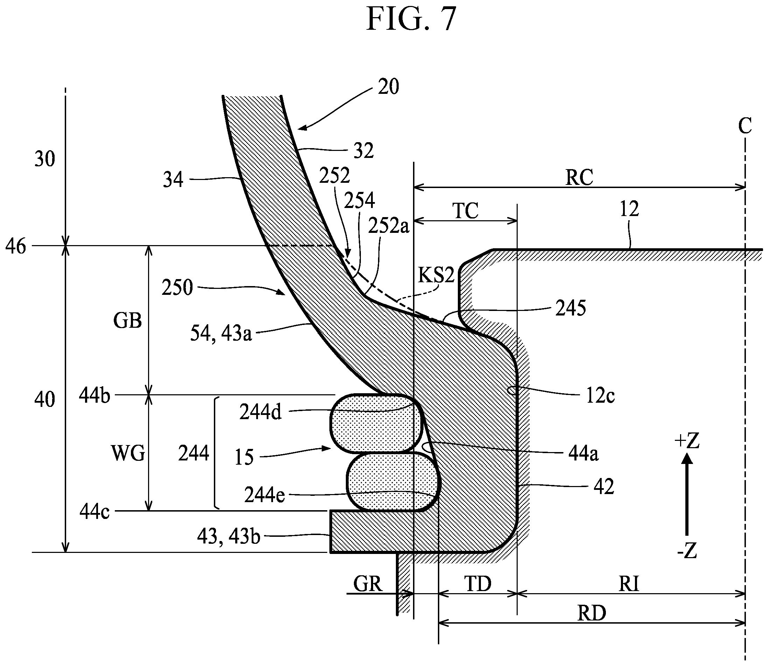

Fig. 7 is a cross section of an example of a configuration of a dust cover 20 according to a third embodiment. In the first embodiment, the fixed portion 40 in which the dust cover 20 includes both the bent portion 52a and the bent portion 252a is described. As shown in Fig. 7, the dust cover 20 according to the third embodiment includes the fixed portion 40 having the bent portion 252a, as in the first embodiment, but differs from the first embodiment in that the fixed portion 40 does not include the bent portion 52a. In other words, in the third embodiment, the extended outer surface 54 (or the outer circumferential surface 43a) extends as a continuous curved surface from the boundary portion 46 to the groove 44. The extended outer surface 54 (or the outer circumferential surface 43a) of the third embodiment has the same shape as the virtual surface KS1 in the first embodiment.

As in the first embodiment, the bent surface 252 of the third embodiment includes the extended inner surface 254, the extended surface 245, and the bent portion 252a. In other words, in the third embodiment, the bent portion 252a is provided at a location spaced apart from the corner portion 44d. According to the above-described configuration, as in the first embodiment, stress caused by swinging of the ball stud 11 is distributed between the corner portion 44d and the bent portion 252a. Thus, in the third embodiment, as in the first embodiment, the fatigue life of the dust cover 20 can be improved as compared with the comparative example.

It should be noted that a comparative test was conducted by numerical simulation using the finite element method to compare the fatigue life of the dust cover 20 (shown in Fig. 4, Fig. 6, or Fig. 7) according to each of the embodiments of the present disclosure with the fatigue life of the dust cover 20H of the comparative example. The results of the comparative test showed that in each of the embodiments of the present disclosure, the fatigue life of the dust cover 20 was more than 1.5 times the fatigue life of the dust cover 20H of the comparative example. As described above, the comparative test by numerical simulation confirms that the dust cover 20 of the present disclosure has a longer fatigue life than the dust cover 20H of the comparative example.

### D: Modifications

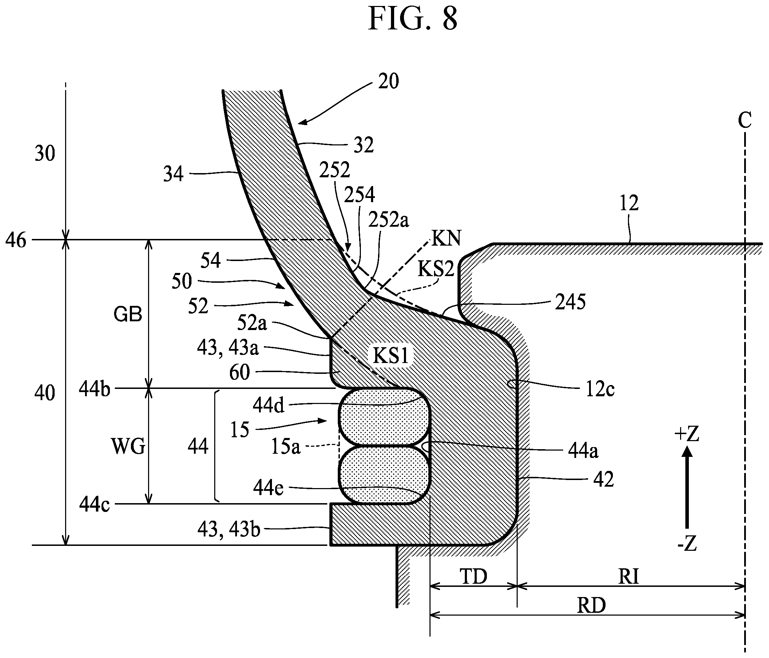

Specific modifications that may be applied to each of the above-described embodiments are set forth below. Two or more modifications freely selected from the following modifications may be combined as long as no conflict arises from such combination.
(1) In the above-described embodiment, a configuration is described in which the groove bottom 44a of the groove 44 of the fixed portion 40 is inclined relative to the central axis C; however, as shown in Fig. 8, the groove bottom 44a of the groove 44 may be a cylindrical surface having a constant radius in the axial direction. It should be noted that in Fig. 8, a configuration is described in which the fixed portion 40 includes both the bent portion 52a and the bent portion 252a; furthermore, in the second embodiment (Fig. 6) in which the bent portion 252a is omitted or in the third embodiment (Fig. 7) in which the bent portion 52a is omitted, the groove bottom 44a of the groove 44 may be a cylindrical surface as shown in Fig. 8.
(2) In the present disclosure, the term "n-th" (where n is a natural number) is used only as a formal and convenient label for distinguishing elements in the description and has no substantive meaning. Thus, the positions of the respective elements, the order of manufacture of the elements and the like are not limited by reference to the term "n-th".

### Description of Reference Signs

100... joint mechanism, 10... ball joint, 11... ball stud, 11a... shaft portion, 11b... spherical portion, 11c... screw portion, 12... socket, 12a...bearing portion, 12b... support portion, 12c... mounting groove, 13... knuckle, 14... nut, 15... fastening member, 15a... outer peripheral portion, 20... dust cover, 22... sealing portion, 30... body portion, 32... inner surface, 34... outer surface, 36... neck portion, 40... fixed portion, 42... inner circumferential surface, 43 (43a, 43b)... outer circumferential surface, 44... groove, 44a... groove bottom, 44b... groove wall, 44c... groove wall, 44d... corner portion, 44e... corner portion, 46... boundary portion, 50... constricted portion, 52... bent surface, 52a... bent portion, 54... extended outer surface, 60... thick portion, 245... extended surface, 252...bent surface, 252a... bent portion, 254... extended inner surface, C... central axis, KS1... virtual surface, KS2... virtual surface.

## Claims

1. A dust cover configured to be fixed to a socket supporting a ball stud, the dust cover comprising:
a body portion configured to surround the ball stud; and
an annular fixed portion connected to the body portion,
wherein the fixed portion includes:
an inner circumferential surface configured to be in contact with a mounting groove of the socket;
an outer circumferential surface opposite to the inner circumferential surface;
an annular groove provided in the outer circumferential surface, the groove being configured to accommodate a fastening member for fastening the fixed portion to the socket; and
an extended outer surface connecting an outer surface of the body portion to the outer circumferential surface, and
wherein the outer circumferential surface is bent relative to the extended outer surface at a first bent portion that is located further radially outward along a radius of the fixed portion than a first virtual surface obtained by continuously extending the outer surface of the body portion toward the groove, the outer circumferential surface being configured to be located further radially outward than an outer peripheral portion of the fastening member.

2. The dust cover according to claim 1, wherein the groove includes:
a groove bottom along a circumferential direction of the fixed portion;
a first groove wall protruding radially outward from an edge portion of the groove bottom that is close to the body portion; and
a second groove wall protruding radially outward from an edge portion of the groove bottom that is far from the body portion.

3. A dust cover configured to be fixed to a socket supporting a ball stud, the dust cover comprising:
a body portion configured to surround the ball stud; and
an annular fixed portion connected to the body portion,
wherein the fixed portion includes:
an inner circumferential surface configured to be in contact with a mounting groove of the socket;
an outer circumferential surface opposite to the inner circumferential surface;
an annular groove provided in the outer circumferential surface, the groove being configured to accommodate a fastening member for fastening the fixed portion to the socket; and
an extended outer surface connecting an outer surface of the body portion to the outer circumferential surface,
wherein the outer circumferential surface is bent relative to the extended outer surface at a first bent portion that is located further radially outward along a radius of the fixed portion than a first virtual surface obtained by continuously extending the outer surface of the body portion toward the groove,
wherein the groove includes:
a groove bottom along a circumferential direction of the fixed portion;
a first groove wall protruding radially outward from an edge portion of the groove bottom that is close to the body portion; and
a second groove wall protruding radially outward from an edge portion of the groove bottom that is far from the body portion, and
wherein in a state in which the ball stud swings within a range of 20 degrees or less relative to a central axis of the fixed portion, a corner portion of the groove between the groove bottom and the first groove wall remains unchanged in position.

4. The dust cover according to claim 2 or 3, wherein the first groove wall is a planar surface perpendicular to a central axis of the fixed portion.

5. The dust cover according to claim 2 or 3, wherein the extended outer surface is a region from a boundary portion to the outer circumferential surface, the boundary portion being spaced apart from the first groove wall toward the body portion by a distance equal to 1.2 times a groove width of the groove in a direction of a central axis of the fixed portion in a state in which the dust cover is undeformed.

6. The dust cover according to claim 2 or 3, wherein a first distance from the edge portion of the groove bottom that is close to the body portion to a central axis of the fixed portion is greater than a second distance from the edge portion of the groove bottom that is far from the body portion to the central axis of the fixed portion.

7. The dust cover according to claim 6, wherein a difference between the first distance and the second distance is 15% or more and 60% or less of a groove width of the groove.

8. The dust cover according to claim 2 or 3, wherein the groove bottom is inclined relative to a central axis of the fixed portion such that a first distance from the edge portion of the groove bottom that is close to the body portion to the central axis of the fixed portion is greater than a second distance from the edge portion of the groove bottom that is far from the body portion to the central axis of the fixed portion.

9. The dust cover according to claim 1 or 3,
wherein the fixed portion further includes a bent surface connecting an inner surface of the body portion to the inner circumferential surface,
wherein the bent surface includes:
a first surface continuous with the inner surface of the body portion; and
a second surface connecting the first surface to the inner circumferential surface, and
wherein the second surface is bent relative to the first surface radially inward along the radius of the fixed portion at a second bent portion that is located further outward than a second virtual surface obtained by continuously extending the inner surface of the body portion toward the inner circumferential surface.

10. The dust cover according to claim 9, wherein a location of the first bent portion in a radial direction of the fixed portion is different from a location of the second bent portion in the radial direction.

11. The dust cover according to claim 9, wherein a location of the first bent portion in a direction of a central axis of the fixed portion is different from a location of the second bent portion in the direction of the central axis.

12. A dust cover configured to be fixed to a socket supporting a ball stud, the dust cover comprising:
a body portion configured to surround the ball stud; and
an annular fixed portion connected to the body portion,
wherein the fixed portion includes:
an inner circumferential surface configured to be in contact with a mounting groove of the socket;
an outer circumferential surface opposite to the inner circumferential surface;
an annular groove provided in the outer circumferential surface, the groove being configured to accommodate a fastening member for fastening the fixed portion to the socket; and
a bent surface connecting an inner surface of the body portion to the inner circumferential surface,
wherein the bent surface includes:
a first surface continuous with the inner surface of the body portion; and
a second surface connecting the first surface to the inner circumferential surface, and
wherein the second surface is bent relative to the first surface radially inward along a radius of the fixed portion at a second bent portion that is located further outward than a second virtual surface obtained by continuously extending the inner surface of the body portion toward the inner circumferential surface.

13. A joint mechanism comprising:
a socket provided with a mounting groove;
a ball stud supported by the socket;
a dust cover including:
a body portion surrounding the ball stud; and
an annular fixed portion connected to the body portion; and
a fastening member fastening the fixed portion to the socket,
wherein the fixed portion includes:
an inner circumferential surface in contact with the mounting groove of the socket;
an outer circumferential surface opposite to the inner circumferential surface;
an annular groove provided in the outer circumferential surface and accommodating the fastening member; and
an extended outer surface connecting an outer surface of the body portion to the outer circumferential surface, and
wherein the outer circumferential surface is bent relative to the extended outer surface at a first bent portion that is located further radially outward along a radius of the fixed portion than a first virtual surface obtained by continuously extending the outer surface of the body portion toward the groove, the outer circumferential surface being configured to be located further radially outward than an outer peripheral portion of the fastening member.

14. The joint mechanism according to claim 13, wherein the groove includes:
a groove bottom along a circumferential direction of the fixed portion;
a first groove wall protruding radially outward from an edge portion of the groove bottom that is close to the body portion; and
a second groove wall protruding radially outward from an edge portion of the groove bottom that is far from the body portion.

15. A joint mechanism comprising:
a socket provided with a mounting groove;
a ball stud supported by the socket;
a dust cover including:
a body portion surrounding the ball stud; and
an annular fixed portion connected to the body portion; and
a fastening member fastening the fixed portion to the socket,
wherein the fixed portion includes:
an inner circumferential surface in contact with the mounting groove of the socket;
an outer circumferential surface opposite to the inner circumferential surface;
an annular groove provided in the outer circumferential surface and accommodating the fastening member; and
an extended outer surface connecting an outer surface of the body portion to the outer circumferential surface,
wherein the outer circumferential surface is bent relative to the extended outer surface at a first bent portion that is located further radially outward along a radius of the fixed portion than a first virtual surface obtained by continuously extending the outer surface of the body portion toward the groove,
wherein the groove includes:
a groove bottom along a circumferential direction of the fixed portion;
a first groove wall protruding radially outward from an edge portion of the groove bottom that is close to the body portion; and
a second groove wall protruding radially outward from an edge portion of the groove bottom that is far from the body portion, and
wherein in a state in which the ball stud swings within a range of 20 degrees or less relative to a central axis of the fixed portion, a corner portion of the groove between the groove bottom and the first groove wall remains unchanged in position.

16. The joint mechanism according to claim 14 or 15, wherein the first groove wall is a planar surface perpendicular to a central axis of the fixed portion.

17. A joint mechanism comprising:
a socket provided with a mounting groove;
a ball stud supported by the socket;
a dust cover including:
a body portion surrounding the ball stud; and
an annular fixed portion connected to the body portion; and
a fastening member fastening the fixed portion to the socket,
wherein the fixed portion includes:
an inner circumferential surface in contact with the mounting groove of the socket;
an outer circumferential surface opposite to the inner circumferential surface;
an annular groove provided in the outer circumferential surface and accommodating the fastening member; and
a bent surface connecting an inner surface of the body portion to the inner circumferential surface,
wherein the bent surface includes:
a first surface continuous with the inner surface of the body portion; and
a second surface connecting the first surface to the inner circumferential surface, and
wherein the second surface is bent relative to the first surface radially inward along a radius of the fixed portion at a second bent portion that is located further outward than a second virtual surface obtained by continuously extending the inner surface of the body portion toward the inner circumferential surface.
